# EUROPEAN PATENT APPLICATION

(11) **EP 4 797 123 A1**
(43) Date of publication of application: **26.08.2026**
(21) Application number: 24878864.8
(22) Date of filing: 08.10.2024
(51) Int. Cl.: G06F 16/64

(54) **AUDIO INTERFACE RENDERING METHOD AND APPARATUS, DEVICE, AND STORAGE MEDIUM**

(30) Priority: 20.10.2023 CN 202311370438
(71) Applicant: Beijing Zitiao Network Technology Co., Ltd., Beijing 100190 (CN)
(72) Inventor: CAO, Kun, Beijing 100028 (CN)
(74) Representative: Grünecker Patent- und Rechtsanwälte PartG mbB
(86) International application number: PCT/CN2024/123492
(87) International publication number: WO 2025/082220

(57) **Abstract**

Embodiments of the disclosure provide a method, an apparatus, a device, and a storage medium for rendering an audio interface. An audio playback progress is obtained. An interface object texture is obtained according to the audio playback progress. The interface object texture is rendered into an audio interface for display. According to the method for rendering an audio interface provided by the embodiment of the disclosure, the interface object texture obtained according to the audio playback progress is rendered into the audio interface for display, the performance consumption when the audio interface is rendered can be reduced, and the rendering speed can be improved.

## Description

This application claims priority to Chinese Patent Application No. 202311370438.4, filed on October 20, 2023, and entitled "Method, Apparatus, Device, and Storage Medium for Rendering Audio Interface", which are incorporated herein by reference in their entireties.

### FIELD

Embodiments of the present disclosure relate to the technical field of interface rendering, and in particular to a method, an apparatus, a device, and a storage medium for rendering an audio interface.

### BACKGROUND

At present, mobile terminals have become one of the primary tools for users to perform entertainment activities. A typical usage scenario is singing songs using the mobile terminal. When a user sings a song through an application program on the mobile terminal, lyrics and pitch information may be displayed in an interface of a song application along with the singing progress. In the prior art, when the lyrics and the pitch information are rendered, rendering of the lyrics and the pitch information are mainly implemented based on a central processing unit (CPU) and a memory, which consumes a relatively large amount of CPU performance and may lead to stuttering or intermittence on the terminal, thereby affecting user experience.

### SUMMARY

Embodiments of the present disclosure provide a method, an apparatus, a device, and a storage medium for rendering an audio interface, which can reduce the performance consumption during rendering of an audio interface and improve the rendering speed.

According to a first aspect, an embodiment of the present disclosure provides a method for rendering an audio interface. The method includes: obtaining an audio playback progress; obtaining an interface object texture according to the audio playback progress; and rendering the interface object texture into an audio interface for display.

According to a second aspect, an embodiment of the present disclosure further provides an apparatus for rendering an audio interface. The apparatus includes: an audio playback progress obtaining module configured to obtain an audio playback progress; an interface object texture obtaining module configured to obtain an interface object texture according to the audio playback progress; and a rendering module configured to render the interface object texture into an audio interface for display.

According to a third aspect, an embodiment of the present disclosure further provides an electronic device. The electronic device includes: one or more processors; and a storage device for storing one or more programs. When the one or more programs are executed by the one or more processors, the one or more processors are caused to implement the method for rendering an audio interface according to the embodiments of the present disclosure.

According to a fourth aspect, an embodiment of the present disclosure further provides a storage medium including computer executable instructions. The computer executable instructions, when executed by a computer processor, are configured to perform the method for rendering an audio interface according to the embodiments of the present disclosure.

### BRIEF DESCRIPTION OF DRAWINGS

The above and other features, advantages, and aspects of various embodiments of the present disclosure will become more apparent from the following detailed description taken in conjunction with the accompanying drawings. Throughout the drawings, the same or similar reference numbers refer to the same or similar elements. It should be understood that the drawings are schematic, and members and elements are not necessarily drawn to scale.
FIG. 1 is a schematic flowchart of a method for rendering an audio interface according to an embodiment of the present disclosure;
FIG. 2 is an example diagram of cropping a text texture according to an embodiment of the present disclosure;
FIG. 3 is an example diagram of a first text texture according to an embodiment of the present disclosure;
FIG. 4 is an example diagram of a text texture corresponding to a target text group according to an embodiment of the present disclosure;
FIG. 5 is an example diagram of a pitch texture according to an embodiment of the present disclosure;
FIG. 6 is an example diagram of an intonation texture according to an embodiment of the present disclosure;
FIG. 7 is an example of an intonation evaluation texture according to an embodiment of the present disclosure;
FIG. 8 is an example diagram of a pitch identifier texture according to an embodiment of the present disclosure;
FIG. 9 is an example diagram of an audio interface according to an embodiment of the present disclosure;
FIG. 10 is a schematic structural diagram of a rendering apparatus of an audio interface according to an embodiment of the present disclosure;
FIG. 11 is a schematic structural diagram of an electronic device according to an embodiment of the present disclosure.

### DETAILED DESCRIPTION

Embodiments of the present disclosure will be described in more detail below with reference to the accompanying drawings. While certain embodiments of the present disclosure are shown in the drawings, it is to be understood that the present disclosure may be implemented in various forms, and should not be construed as limited to the embodiments set forth herein, and rather, these embodiments are provided for a more thorough and complete understanding of the present disclosure. It should be understood that the drawings and embodiments of the present disclosure are for illustrative purposes only and are not intended to limit the scope of the present disclosure.

It should be understood that various steps recited in the method embodiments of the present disclosure may be performed in different orders, and/or may be performed in parallel. Further, the method embodiments may include additional steps and/or omit performing the illustrated steps. The scope of the present disclosure is not limited in this regard.

As used herein, the term "comprising" and variations thereof refer to an open-ended inclusion, i.e., "including but not limited to". The term "based on" is "based at least in part on". The term "one embodiment" means "at least one embodiment". The term "another embodiment" means "at least one further embodiment". The term "some embodiments" means "at least some embodiments". The relevant definitions of other terms will be given below.

It should be noted that the concepts such as "first" and "second" mentioned in this disclosure are merely used to distinguish different apparatuses, modules, or units, and are not intended to limit the order of functions performed by the apparatuses, modules, or units or their mutual dependency relationship.

It should be noted that the modification of "a" and "a plurality" mentioned in this disclosure is illustrative and not limiting, and those skilled in the art should understand that "one or more" should be understood unless the context clearly indicates otherwise.

The names of messages or information interacted between a plurality of devices in the embodiments of the present disclosure are for illustrative purposes only and are not intended to limit the scope of such messages or information.

It may be understood that, before the technical solutions disclosed in the embodiments of the present disclosure are used, types, usage scopes, usage scenarios and the like of personal information related to the present disclosure should be notified to the user in an appropriate manner according to the relevant laws and regulations and the authorization should be obtained from the user.

For example, in response to receiving an active request from a user, prompt information is sent to the user to explicitly prompt the user that the requested operation will need to acquire and use the personal information of the user. Therefore, the user may autonomously select whether to provide personal information to software or hardware, such as an electronic device, an application, a server, a storage medium, or the like, executing the operation of the technical solution of the present disclosure according to the prompt information.

As an optional but non-limiting implementation, in response to receiving the active request from the user, the manner of sending the prompt information to the user may be, for example, a pop-up window, and the prompt information may be presented in a text manner in the pop-up window. In addition, the pop-up window may further carry a selection control for the user to select "agree" or "not agree" to provide personal information to the electronic device.

It may be understood that the foregoing notification and obtaining a user authorization process is merely illustrative, and does not constitute a limitation on implementations of the present disclosure, and other manners of meeting related laws and regulations may also be applied to implementations of the present disclosure.

It may be understood that data involved in the technical solution (including but not limited to the data itself, the acquisition or use of the data) should follow the requirements of the corresponding laws and regulations and related provisions.

Embodiments of the present disclosure provides a method, an apparatus, a device, and a storage medium for rendering an audio interface. An audio playback progress is obtained. An interface object texture is obtained according to the audio playback progress. The interface object texture is rendered into an audio interface for display. According to the method for rendering the audio interface provided by the embodiment of the present disclosure, the interface object texture obtained according to the audio playback progress is rendered into the audio interface for display, the performance consumption during rendering of the audio interfaced can be reduced, and the rendering speed can be improved.

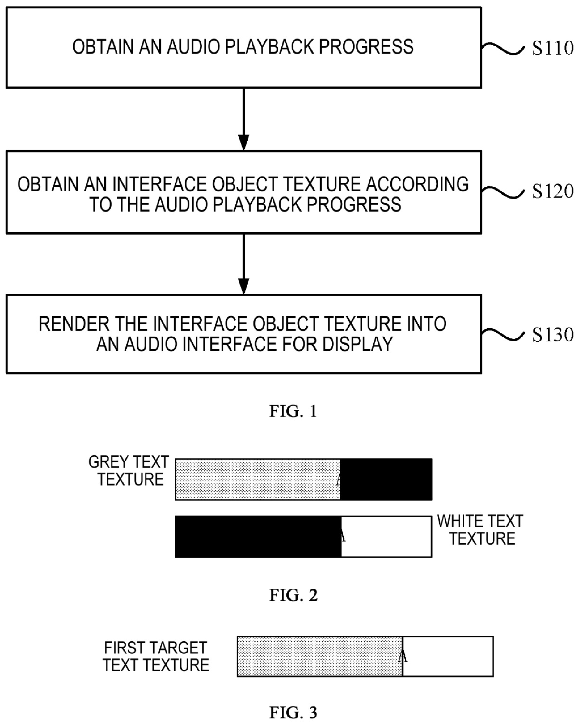

FIG. 1 is a schematic flowchart of a method for rendering an audio interface according to an embodiment of the present disclosure.

As shown in FIG. 1, the method includes: S110, obtaining an audio playback progress.

In some embodiments, the audio may be a pre-generated or pre-recorded audio, such as a song. The audio playback progress may be understood as a time point at which the audio is currently played or a time point at which the audio adjusted by user triggering is currently located. For example, assuming that the total duration of one audio is 3 minutes, and that the audio is currently playing at 1 minute 20 seconds, the audio playback progress is 1 minute 20 seconds. In this embodiment, for any audio playing tool, an underlying progress component may be invoked to obtain the audio playback progress, and the manner of obtaining the audio playback progress is not limited herein.

At S120, an interface object texture is obtained according to the audio playback progress.

In some embodiments, the interface object texture includes at least one of the following: a text texture, a pitch texture, or an intonation texture. The interface object may be an object corresponding to the currently played audio displayed in the audio interface, and may include at least one of text information, pitch information, or intonation information. The audio may include a background audio and a standard speech audio. If the audio is a song, the background audio is an accompaniment, and the standard speech audio is a sung audio. The text information is text corresponding to the standard speech audio, that is, lyrics, the pitch information is a pitch height of the standard speech audio; and the intonation information represents an accuracy of the pitch of the acquired speech audio.

In the application scenario, the user sings a corresponding song following the played audio, the terminal collects the speech audio of the user in real time, and with the playing of the audio and the singing of the user, for each frame of image displayed in the audio interface, the interface object to be displayed at the current frame is obtained, that is, the interface object texture corresponding to the audio playback progress is obtained.

Optionally, if the interface object texture is a text texture, the manner of obtaining the interface object texture according to the audio playback progress may be: determining a target text group from a text file according to the audio playback progress; and obtaining a first text texture corresponding to a first text group and a second text texture corresponding to a second text group.

In some embodiments, the text file includes a plurality of text groups, the text group includes a plurality of characters, and the character carries a timestamp. The target text group includes the first text group that is currently played and a predetermined number of second text groups that have been played and/or have not been played. The text file may be understood as a lyrics file corresponding to the audio. In this embodiment, since the song is sung sentence by sentence, the text is performed by being split into sentences, and one sentence of the text corresponds to one text group. The timestamp carried by the character includes two pieces of information, i.e., a start moment and a duration of the character, and may be represented by a form such as "character<start moment, duration>". The currently played first text group may be a text group containing a character whose timestamp matches with the audio playback progress. The timestamp matching with the audio playback progress may be understood as that a moment corresponding to the audio playback progress falls within a timestamp corresponding to the character. The predetermined number may be preset, which is not limited herein.

Specifically, the manner of determining the target text group from the text file according to the audio playback progress may be: obtaining a text group in the text file containing a character whose timestamp matches with the audio playback progress, as a first target text group; and obtaining a predetermined number of text groups before and/or after the first target text group as a second target text group. In this embodiment, since the character carries a timestamp, the text group consisting of characters corresponds to a time period, and the plurality of text groups contained in the text file are automatically ranked according to time. After the target text group is determined, the corresponding text texture may be obtained according to the target text group. In this embodiment, the text texture is determined based on the text group, and the accuracy of text rendering may be improved.

Optionally, the manner of obtaining the first text texture corresponding to the first text group may be: obtaining a text texture of a first display style and a text texture of a second display style corresponding to the first text group; determining a character having a timestamp matching with the audio playback progress as a cropping point; cropping the text texture of the first display style and/or the text texture of the second display style based on the cropping point; and generating the first text texture corresponding to the first text group according to the cropped text texture of the first display style and the cropped text texture of the second display style.

In some embodiments, the first display style and the second display style are different. The display style may refer to color or transparency. In this application scenario, in order to highlight the playback progress of the audio, the text that has not been played and the text that has been played may be rendered into different display styles. When the audio is played to a certain character within the first target text group, the text texture corresponding to the first target text group needs to be divided into two display styles: one for the preceding part, and another for the following part. The first display style may be used to represent that the corresponding text or part has been played, and the second display style may be used to represent that the corresponding text or part has not been played; or the first display style may be used to represent that the corresponding text or part has not been played, and the second display style may be used to represent that the corresponding text or part has been played, which is not limited herein. Specifically, the manner of obtaining the text texture of the first display style and the text texture of the second display style corresponding to the first text group may be: obtaining the text texture of the first display style and the text texture of the second display style corresponding to the first text group from a pre-created buffering region. In this embodiment, character drawing of the first display style and the second display style is performed on each text group of the text file in advance, so that the text texture of the first display style and the text texture of the second display style of each text group are generated, and the text texture of the first display style and the text texture of the second display style are stored in a texture buffering region. By cropping the text in the two display styles to generate the final text texture, the playback progress of the audio is highlighted, and the display effect of the text can be enriched.

Specifically, assuming that the first display style indicates that the text has been played, and the second display style indicates that the text has not been played, the manner of cropping the text texture of the first display style based on the cropping point may be: cropping, in the text texture of the first display style, a text texture after the cropping point. The manner of cropping the text texture of the second display style based on the cropping point may be cropping, in the text texture of the second display style, a text texture before the cropping point.

In this embodiment, the first display style represents that the text has been played, a part of the text texture corresponding to the text that has not been played in the text texture of the first display style is cropped, and a part of the text texture corresponding to the text that has been played in the text texture of the first display style is retained. The second display style represents that the text has not been played, a part of the text texture corresponding to the text that has been played in the text texture of the second display style is cropped, and a part of the text texture corresponding to the text has not been played in the text texture of the second display style is retained. For example, FIG. 2 is an example diagram of cropping a text texture in an embodiment. As shown in FIG. 2, the first display style is in gray, the second display style is in white. It is assumed that "A" is a cropping point, the texture after A in the gray text texture is cropped, the texture before A in the white text texture is cropped, and the black portion in the figure represents the cropped portion. In this embodiment, the text textures of two display styles are cropped based on the cropping point, so that the cropping precision can be improved.

Optionally, the manner of generating the first text texture corresponding to the first text group according to the cropped text texture of the first display style and the cropped text texture of the second display style may be: if the text texture of the first display style and the text texture of the second display style are both cropped based on the cropping point, stitching the text texture of the first display style after cropped and the text texture of the second display style after cropped to obtain the first text texture corresponding to the first text group; and if the text texture of the first display style is cropped based on the cropping point and the text texture of the second display style is not cropped, superimposing the text texture of the first display style after cropped onto a corresponding part of the uncropped text texture of the second display style to obtain the first text texture corresponding to the first text group.

Specifically, if the text texture of the first display style and the text texture of the second display style are cropped based on the cropping point, the cropped text texture of the first display style and the cropped text texture of the second display style are stitched at the original cropping point. If the text texture of the first display style is cropped based on the cropping point, and the text texture of the second display style is not cropped, the cropped text texture of the first display style is aligned and superimposed with the uncropped text texture of the second display style based on the cropping point. For example, FIG. 3 is an example diagram of a first text texture in this embodiment. As shown in FIG. 3, in the first text texture, a part before the cropping point A is displayed in gray, and a part after A is displayed in white. In this embodiment, it is ensured that the first text texture is displayed with the part before the cropping point in the first display style, and the part after the cropping point in the second display style, so that the audio playback progress is highlighted.

Optionally, the manner of obtaining the second text texture corresponding to the second text group may be: obtaining the text texture of the first display style text corresponding to the second text group that has been played and/or the text texture of the second display style of the second text group that has not been played.

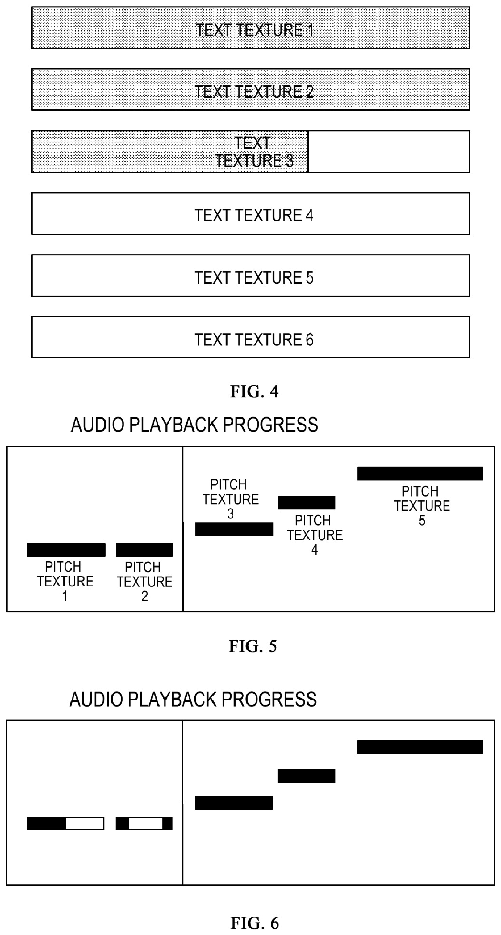

In some embodiments, the second text group is a text group within a certain interval from the first text group. For example, assuming that a predetermined number is 8, the first text group may include three preceding and five following text groups of the first text group. With the first display style representing that the text has been played and the second display style representing that the text has not been played, the text texture of the first display style corresponding to the second text group that has been played and/or the text texture of the second display style of the second text group that has not been played are obtained. For example, FIG. 4 is an example diagram of a text texture corresponding to a target text group in this embodiment. As shown in FIG. 4, a text texture 1 and a text texture 2 are text textures corresponding to the text group that has been played, a text texture 3 is a text texture corresponding to a text group that is currently playing, and a text texture 4, a text texture 5, and a text texture 6 are text textures corresponding to the text group that has not been played.

Optionally, if the interface object texture is a pitch texture, the manner of obtaining the interface object texture according to the audio playback progress may be: determining a time segment according to the audio playback progress; and obtaining a pitch texture having a timestamp falling within the time segment.

In some embodiments, the timestamp corresponding to the audio playback progress is within the time segment. The time segment is a period of time in the playing duration corresponding to the audio, the time segment is composed of a first sub-segment before the audio playback progress and a second sub-segment after the audio playback progress, and a length of the time segment may be set based on a size (width or length) of a visible area of a screen of the current terminal device, and a ratio of the first sub-segment to the second sub-segment may be preconfigured. For example, the time segment is set to be 10 seconds, the first sub-segment and the second sub-segment are 2:8, and the time segment is composed of 2 seconds before the audio play progress and 8 seconds after the audio play progress. Assuming that the audio play progress is 1 minute 30 seconds, the time segment corresponding to the audio play progress is: from 1 minute 28 seconds to 1 minute 38 seconds.

In some embodiments, the pitch texture is pre-created based on audio and carries timestamps and standard pitch information. The position information of the pitch texture in the audio interface may be determined according to the timestamp and the standard pitch information. The pitch texture may be a bar with a predetermined shape, and the predetermined shape may be a rectangle, a flat ellipse, or an irregular pattern. The irregular pattern may be a pattern enclosed by two straight lines and two arcs. The standard pitch information is characterized by a quantized value. The timestamp carried by the pitch texture may include two pieces of information, i.e., a start moment and a duration, and one piece of pitch information may carry a plurality of different timestamps, since in a piece of audio, different timestamps may correspond to the same pitch. The standard pitch information may be understood as a pitch of the speech audio in the audio data. The information carried by the pitch texture may be represented as follows: "pitch a: <start moment 1, duration 1>, <start moment 2, duration 2>", that is, the pitch a carries two timestamps. Specifically, the creation process of the pitch texture may be: extracting standard pitch information included in the audio, generating a pitch texture of a predetermined shape for the same standard pitch information, and determining a timestamp corresponding to the pitch texture, carrying the standard pitch information and the timestamp in the pitch texture, and storing the created pitch texture into the texture buffering region.

In this embodiment, after the time segment corresponding to the audio playback progress is determined, the pitch texture having a timestamp falling within the time segment is obtained. For example, FIG. 5 is an example diagram of a pitch texture according to an embodiment of the present disclosure. As shown in FIG. 5, pitch textures failing within a time segment corresponding to the audio playback progress includes a pitch texture 1, a pitch texture 2, a pitch texture 3, a pitch texture 4, and a pitch texture 5, where the pitch texture 1 and the pitch texture 2 are pitch textures before the audio play progress, the pitch texture 3, the pitch texture 4, and the pitch texture and the pitch texture 5 are pitch textures after the audio play progress. In this embodiment, the pitch texture is determined based on the time segment corresponding to the audio playback progress, and the accuracy may be improved.

Optionally, if the interface object texture is an intonation texture, the manner of obtaining the interface object texture according to the audio playback progress may be: obtaining intonation evaluation information corresponding to the audio playback progress; and generating at least one intonation texture according to the intonation evaluation information.

In some embodiments, the intonation evaluation information represents intonation evaluation information of the acquired speech audio frame; and the intonation texture carries a timestamp and standard pitch information. The form of the intonation texture carrying the timestamp is similar to that of the pitch texture, and details are not described herein again. Position information of the intonation texture on the audio interface may be determined according to the timestamp and the standard pitch information of the intonation texture. In this application scenario, the user sings a corresponding song following the background audio, the terminal acquires the speech audio in real time, extracts the pitch information from the acquired speech audio, and compares the pitch information with the standard pitch information to obtain the intonation evaluation information.

Specifically, the manner for obtaining the intonation evaluation information corresponding to the audio playback progress may be: obtaining pitch information of speech audio frames acquired within a predetermined historical duration; determining a deviation between the pitch information and corresponding standard pitch information; and determining the intonation evaluation information according to the deviation.

In some embodiments, the intonation evaluation information includes: matching with the standard pitch information and failing to match with the standard pitch information. The predetermined historical duration may be a certain duration before the audio playback progress. Determining the deviation between the pitch information and the corresponding standard pitch information may be characterized by a difference between a quantized value of pitch information of the acquired speech audio frame and a quantized value of the corresponding standard pitch information. Specifically, the manner of determining the intonation evaluation information according to the deviation may be: if the deviation between the pitch information and the corresponding standard pitch information is less than or equal to a predetermined threshold, the pitch information of the acquired speech audio frame matches with the standard pitch information, and if the deviation between the pitch information and the corresponding standard pitch information is greater than the predetermined threshold, the pitch information of the acquired speech audio frame does not match with the standard pitch information.

Specifically, the manner of generating at least one intonation texture according to the intonation evaluation information may be: extracting, as an intonation timestamp, a timestamp of a speech audio frame for which the intonation evaluation information matches with the standard pitch information; and generating the at least one intonation texture according to the intonation timestamp.

In some embodiments, the pitch texture may be a bar with a predetermined shape, and the predetermined shape may be a rectangle, a flat ellipse, or an irregular pattern. The irregular pattern may be a pattern enclosed by two straight lines and two arcs. In this embodiment, the pitch texture and the intonation texture are in the same shape, the intonation texture is overlapped with a partial region of the pitch texture in the audio interface, and the intonation texture is above the pitch texture. The display styles (such as color or transparency) of the intonation texture and the pitch texture are different. The manner of generating the at least one intonation texture according to the intonation timestamp may be: dividing intonation timestamps that are continuous and corresponds to the same standard pitch information into one intonation segment, and generating an intonation texture according to the intonation segment. For example, FIG. 6 is an example diagram of an intonation texture in this embodiment. As shown in FIG. 6, the black rectangular bar corresponds to the pitch texture, and the white rectangular bar corresponds to the intonation texture, and compared with FIG. 5, a part of the white rectangular bar is covered on the black rectangular bar, and the pitch information representing the speech audio frame acquired in the time period matches with the standard pitch information.

Optionally, the intonation texture further includes an intonation evaluation texture, and the intonation evaluation information is configured to represent information on accuracy of a pitch of the acquired speech audio. The manner of obtaining the intonation evaluation texture according to the audio playback progress may be: obtaining the intonation evaluation texture according to the deviation between the pitch information and the corresponding standard pitch information.

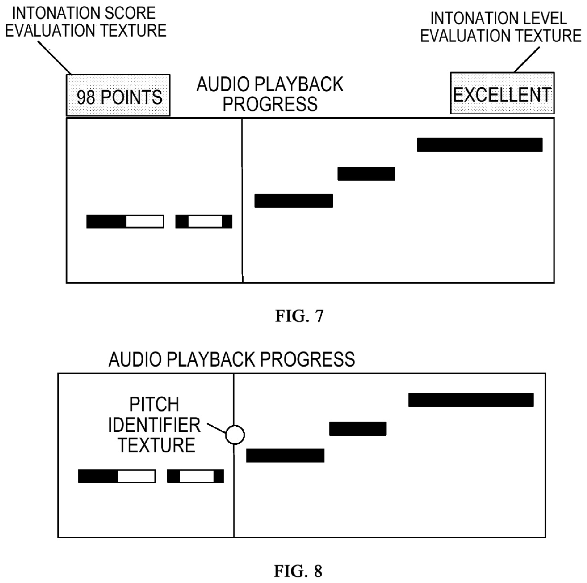

In some embodiments, the intonation evaluation texture includes an intonation score evaluation texture and/or an intonation level evaluation texture. The intonation score evaluation texture may be a texture corresponding to intonation score evaluation information, and the intonation score evaluation information may be understood as an intonation score determined according to a deviation between the pitch information of the acquired speech audio frame and the corresponding standard pitch information. The audio score may be a value between 0 and 100. In this embodiment, a correspondence between the deviation and the intonation score may be pre-established, the intonation score is determined according to the correspondence, and the score evaluation texture is generated according to the intonation score. The level evaluation texture may be a texture corresponding to level evaluation information, and the level evaluation information may be a plurality of preset evaluation levels, for example, three levels: excellent, good and poor. The level evaluation texture may be pre-created and stored in the texture buffering region. In this embodiment, a correspondence between the deviation and the evaluation level may be pre-established, the level evaluation information is determined according to the correspondence, and finally the level evaluation texture is obtained according to the level evaluation information. For example, FIG. 7 is an example of an intonation evaluation texture in this embodiment. As shown in FIG. 7, according to a deviation between the pitch information of the acquired speech audio frame and the corresponding standard pitch information, the determined audio score is 98 points, the level evaluation information is excellent, an intonation score evaluation texture according to the 98 points is generated, and the intonation level evaluation texture corresponding to "excellent" is obtained from the texture buffering region.

At S130, the interface object texture is rendered into an audio interface for display.

In this embodiment, after obtaining at least one interface object texture among the text texture, the pitch texture, the intonation texture, the pitch identifier texture, and the intonation evaluation texture, these interface object textures are put into a shader, and rendering of all interface object textures are completed at a time by a graphics processing unit (GPU).

Specifically, the manner of rendering the interface object texture into the audio interface for display may be: superimposing the interface object texture onto a predetermined empty texture to obtain a target texture; and rendering the target texture to the audio interface for display.

In some embodiments, the predetermined empty texture may be a pre-created empty texture without pixel content and matching a size of the screen of the terminal. The process of superimposing the interface object texture onto the predetermined empty texture may be: performing affine transformation on the interface object texture, and superimposing the affine transformed interface object texture onto the predetermined empty texture.

Optionally, if the interface object texture includes the pitch texture and the intonation texture, the manner of superimposing the interface object texture onto the predetermined empty texture may be: superimposing the pitch texture onto the predetermined empty texture, and then superimposing the intonation texture onto the predetermined empty texture on which the pitch texture is superimposed.

In this embodiment, the pitch texture is first superimposed and then the intonation texture is superimposed, so that when displayed, the intonation texture covers the pitch texture having the same timestamp, so that the user can intuitively view which part of the sung speech audio has the pitch information matching with the standard pitch information.

Optionally, the process of rendering the interface object texture into the audio interface for display may be: obtaining position information of a pixel point in the audio interface; determining, according to the position information, whether the pixel point falls into an area corresponding to the interface object texture; if the pixel point falls into the area corresponding to the interface object texture, rendering the pixel point with a color corresponding to the interface object texture; and if the pixel point does not fall into the area corresponding to the interface object texture, rendering the pixel with a transparent color.

In this embodiment, when rendering the audio interface, the GPU processes each pixel point, and thus during the rendering, it is determined whether each pixel point in the audio interface falls into a region corresponding to the interface object texture; if the pixel point falls into the region corresponding to the interface object texture, the pixel point is colored as a color corresponding to the interface object texture; and if the pixel point does not fall into the region corresponding to the interface object texture, the pixel point is colored as a transparent color.

Optionally, the pitch texture further includes a pitch identifier texture, and the pitch identifier is configured to represent a pitch of the acquired speech audio. The manner of superimposing the interface object texture onto the predetermined empty texture may be: for the pitch identifier texture, obtaining pitch information of the currently acquired speech audio frame; determining position information of the pitch identifier texture according to the pitch information; and superimposing the pitch identifier texture onto the predetermined empty texture based on the position information.

In some embodiments, the pitch identifier texture is configured to represent pitch information of a currently acquired speech audio frame, and the pitch identifier texture may be a pre-created texture with a predetermined shape, for example, a circle or a rectangle. The pitch information may be represented by a quantized value, the position information of the pitch identifier texture is determined according to the quantized pitch information, then affine transformation is performed on the position information, and the pitch identifier texture after affine transformation is superimposed on the predetermined empty texture. For example, FIG. 8 is an example diagram of a pitch identifier texture in this embodiment. As shown in FIG. 8, the pitch identifier texture is circular, and moves up and down according to the pitch information on a line corresponding to the audio playback progress.

Optionally, the manner of rendering the interface object texture into the audio interface for display may be: determining transparency of a level evaluation texture for the level evaluation texture; and rendering the evaluation texture onto the audio interface for display based on the transparency.

In some embodiments, the level evaluation texture may set a life cycle, e.g., 2 seconds, when displayed in the interface. In the life cycle, in order to enable the level evaluation texture to present a gradually change effect, the transparency of the level evaluation texture may be adjusted, for example, the transparency of the level evaluation texture is changed in a certain manner (for example, first increasing then decreasing, or gradually increasing, or gradually decreasing). In this embodiment, the manner of change of transparency is not limited. Specifically, the transparency of the level evaluation texture at the current moment is determined; and the evaluation texture is rendered to the audio interface for display based on the transparency.

Optionally, the method further includes the following steps: creating a texture buffering region; generating a text texture and a pitch texture based on the audio; and storing the text texture and the pitch texture into the texture buffering region.

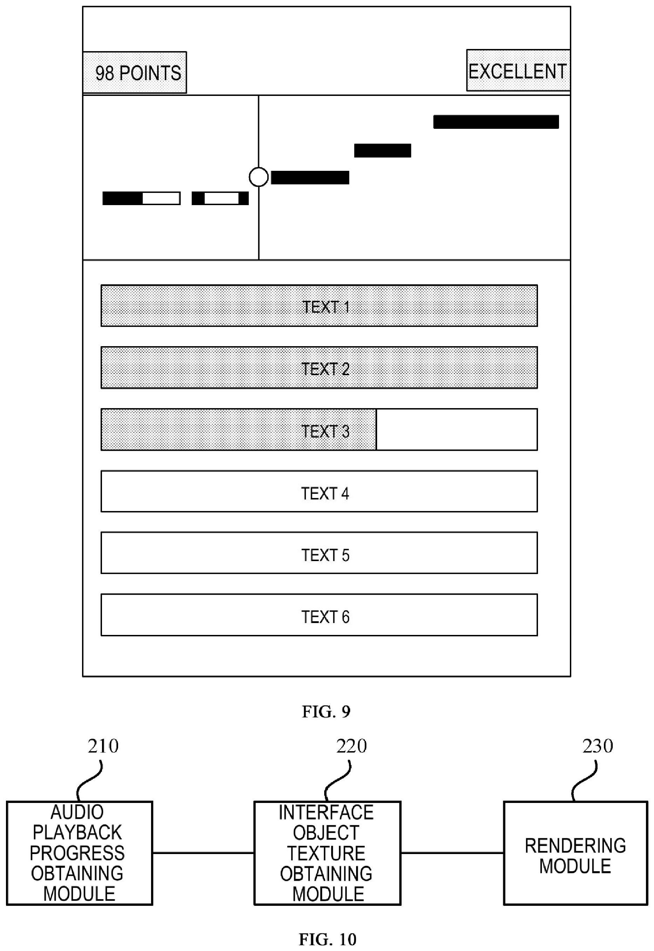

In some embodiments, the process of generating the text texture and the pitch texture according to the audio may refer to the foregoing embodiments, and details are not described herein again. For example, FIG. 9 is an example diagram of an audio interface according to an embodiment of the present disclosure. As shown in FIG. 9, text, pitch information and intonation information are displayed in the audio interface.

On the basis of the foregoing embodiment, this embodiment is applied to an audio interface rendering scene when the user sings along with a background audio of a target song, and when the user sings the song, the terminal device obtains a playback progress of the background audio of the target song in real time, then obtains a lyrics texture of the target song, a pitch texture and an intonation texture corresponding to a speech audio according to the playback progress of the background audio, and finally renders the lyrics texture, the pitch texture and the intonation texture into an audio interface for display.

In some embodiments, the speech audio is an audio singing the target song.

According to the technical solution of the embodiments of the present disclosure, the audio playback progress is obtained; the interface object texture is obtained according to the audio playback progress; and the interface object texture is rendered into the audio interface for display. According to the method for rendering an audio interface provided by the embodiments of the present disclosure, the interface object texture obtained according to the audio playback progress is rendered into the audio interface for display, the performance consumption when the audio interface is rendered can be reduced, and the rendering speed can be improved.

FIG. 10 is a schematic structural diagram of an apparatus for rendering an audio interface according to an embodiment of the present disclosure. As shown in FIG. 10, the apparatus includes: an audio playback progress obtaining module 210 configured to obtain an audio playback progress; an interface object texture obtaining module 220 configured to obtain an interface object texture according to the audio playback progress; and a rendering module 230 configured to render the interface object texture into an audio interface for display.

Optionally, the interface object texture includes at least one of the following: a text texture, a pitch texture, or an intonation texture. Optionally, in accordance with the interface object texture being a text texture, the interface object texture obtaining module 220 is further configured to: determine a target text group from a text file according to the audio playback progress, where the text file includes a plurality of text groups, the text group includes a plurality of characters, and the character carries a timestamp; the target text group includes a first text group that is currently played and a predetermined number of second text groups that have been played and/or have not been played; and obtain a first text texture corresponding to the first text group and a second text texture corresponding to the second text group.

Optionally, the interface object texture obtaining module 220 is further configured to: obtain a text texture of a first display style and a text texture of a second display style corresponding to the first text group; determine a character having a timestamp matching with the audio playback progress as a cropping point; crop the text texture of the first display style and/or the text texture of the second display style based on the cropping point; and generate the first text texture corresponding to the first text group according to the cropped text texture of the first display style and the cropped text texture of the second display style.

Optionally, the interface object texture obtaining module 220 is further configured to: crop, in the text texture of the first display style, a text texture after the cropping point; and cropping the text texture of the second display style based on the cropping point includes: cropping, in the text texture of the second display style, a text texture before the cropping point.

Optionally, the interface object texture obtaining module 220 is further configured to: in accordance with the text texture of the first display style and the text texture of the second display style being cropped based on the cropping point, stitch the cropped text texture of the first display style and the cropped text texture of the second display style to obtain the first text texture corresponding to the first text group; and in accordance with the text texture of the first display style being cropped based on the cropping point and the text texture of the second display style being not cropped, superimpose the cropped text texture of the first display style onto a corresponding part of the uncropped text texture of the second display style to obtain the first text texture corresponding to the first text group.

Optionally, the interface object texture obtaining module 220 is further configured to: obtain the text texture of the first display style corresponding to the second text group that has been played and/or the text texture of the second display style corresponding to the second text group that has not been played.

Optionally, in accordance with the interface object texture being a pitch texture, the interface object texture obtaining module 220 is further configured to: determine a time segment according to the audio playback progress, where a timestamp corresponding to the audio playback progress is within the time segment; and obtain a pitch texture having a timestamp falling within the time segment, where the pitch texture is pre-created based on audio and carries the timestamp and standard pitch information.

Optionally, in accordance with the interface object texture being an intonation texture, the interface object texture obtaining module 220 is further configured to: obtain intonation evaluation information corresponding to the audio play progress, where the intonation evaluation information represents intonation evaluation information of acquired speech audio frame; and generate at least one intonation texture according to the intonation evaluation information, where the intonation texture carries a timestamp and standard pitch information.

Optionally, the interface object texture obtaining module 220 is further configured to: obtain pitch information of speech audio frames acquired within a predetermined historical duration; determine a deviation between the pitch information and corresponding standard pitch information; and determine the intonation evaluation information according to the deviation, where the intonation evaluation information includes: matching with the standard pitch information and not matching with the standard pitch information.

Optionally, the interface object texture obtaining module 220 is further configured to: extract, as an intonation timestamp, a timestamp of a speech audio frame for which the intonation evaluation information matches with the standard pitch information; and generate the at least one intonation texture according to the timestamp.

Optionally, the rendering module 230 is further configured to: superimpose the interface object texture onto a predetermined empty texture; and render the empty texture to the audio interface for display.

Optionally, the rendering module 230 is further configured to: obtain position information of a pixel point in the audio interface; determine, according to the position information, whether the pixel point falls into an area corresponding to the interface object texture; render, in accordance with the pixel point falling into the area corresponding to the interface object texture, the pixel point with a color corresponding to the interface object texture; and render the pixel point with a transparent color in accordance with the pixel point failing to fall into the area corresponding to the interface object texture,.

Optionally, it further includes: a texture generation module configured to create a texture buffering region; generate a text texture and a pitch texture based on the audio; and store the text texture and the pitch texture into the texture buffering region.

Optionally, the audio playback progress obtaining module 210 is further configured to: obtain a playback progress of a background audio of a target song, where the target song is a song that is currently sung; and the interface object texture obtaining module 220 is further configured to: obtain a lyrics texture of the target song, a pitch texture of the target song, and an intonation texture corresponding to a speech audio of the target song according to the playback progress of the background audio, where the speech audio is an audio of singing the target song; and the rendering module 230 is further configured to render the lyrics texture, the pitch texture, and the intonation texture into the audio interface for display.

The apparatus for rendering an audio interface provided by the embodiments of the present disclosure may perform the method for rendering an audio interface provided by any embodiment of the present disclosure and has functional modules and beneficial effects corresponding to the execution of the method.

It should be noted that the units and modules included in the foregoing apparatus are only divided according to the function logic, but are not limited to the foregoing division, as long as the corresponding functions may be implemented. In addition, the specific names of the functional units are merely for ease of distinguishing, and are not intended to limit the protection scope of the embodiments of the present disclosure.

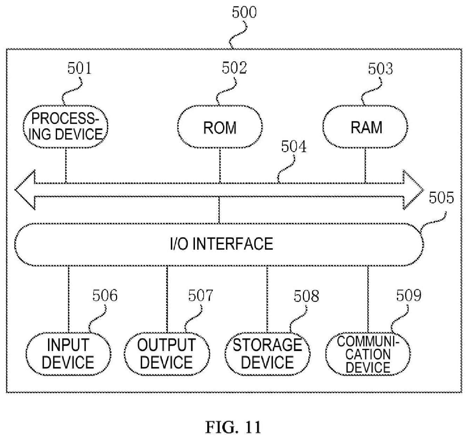

FIG. 11 is a schematic structural diagram of an electronic device according to an embodiment of the present disclosure. Referring to FIG. 11, FIG. 11 is a schematic structural diagram of an electronic device (such as the terminal device or server in FIG. 11) suitable for implementing the embodiments of the present disclosure. The terminal device in the embodiments of the present disclosure may include, but is not limited to, a mobile terminal such as a mobile phone, a notebook computer, a digital broadcast receiver, a PDA (personal digital assistant), a PAD (tablet computer), a PMP (portable multimedia player), an in-vehicle terminal (for example, an in-vehicle navigation terminal), and a fixed terminal such as a digital TV, a desktop computer, or the like. The electronic device shown in FIG. 11 is merely an example, and should not impose any limitation on the functions and scope of use of the embodiments of the present disclosure.

As shown in FIG. 11, the electronic device 500 may include a processing device (for example, a central processing unit, a graphics processor, etc.) 501, which may perform various appropriate actions and processing according to a program stored in a read-only memory (ROM) 502 or a program loaded into a random access memory (RAM) 503 from a storage device 508. In the RAM 503, various programs and data required by the operation of the electronic device 500 are also stored. The processing device 501, the ROM 502, and the RAM 503 are connected to each other through a bus 504. An edit/output (I/O) interface 505 is also connected to the bus 504.

Generally, the following devices may be connected to the I/O interface 505: an input device 506 including, for example, a touch screen, a touchpad, a keyboard, a mouse, a camera, a microphone, an accelerometer, a gyroscope, etc.; an output device 507 including, for example, a liquid crystal display (LCD), a speaker, a vibrator, etc.; a storage device 508 including, for example, a magnetic tape, a hard disk, etc.; and a communication device 509. The communication device 509 may allow the electronic device 500 to communicate wirelessly or wired with other devices to exchange data. While FIG. 11 illustrates the electronic device 500 having various devices, it should be understood that it is not required to implement or have all illustrated devices. More or fewer devices may alternatively be implemented or provided.

In particular, according to an embodiment of the present disclosure, the process described above with reference to the flowchart may be implemented as a computer software program. For example, embodiments of the present disclosure include a computer program product including a computer program carried on a non-transitory computer readable medium, the computer program including program code for performing the method shown in the flowchart. In such embodiments, the computer program may be downloaded and installed from the network through the communication device 509, or installed from the storage device 508 or from the ROM 502. When the computer program is executed by the processing device 501, the foregoing functions defined in the method of the embodiments of the present disclosure are performed.

The names of messages or information interacted between multiple devices in embodiments of the present disclosure are for illustrative purposes only and are not intended to limit the scope of such messages or information.

The electronic device provided by the embodiments of the present disclosure and the method for rendering an audio interface provided in the above embodiments belong to the same inventive concept, and technical details not described in detail in this embodiment may refer to the foregoing embodiments, and the present embodiment has the same beneficial effects as the foregoing embodiments.

An embodiment of the present disclosure provides a computer storage medium having a computer program stored thereon, the program, when executed by a processor, implements the method for rendering an audio interface provided in the foregoing embodiments.

It should be noted that the computer-readable medium described above may be a computer-readable signal medium, a computer-readable storage medium, or any combination of the foregoing two. The computer-readable storage medium may be, for example, but not limited to, an electrical, magnetic, optical, electromagnetic, infrared, or semiconductor system, apparatus, or device, or any combination thereof. More specific examples of computer-readable storage medium may include, but are not limited to, an electrical connection having one or more wires, a portable computer diskette, a hard disk, a random access memory (RAM), a read-only memory (ROM), an erasable programmable read-only memory (EPROM or flash memory), an optical fiber, a portable compact disk read-only memory (CD-ROM), an optical storage device, a magnetic storage device, or any suitable combination of the foregoing. In the present disclosure, the computer-readable storage medium may be any tangible medium containing or storing a program that may be used by or in connection with an instruction execution system, apparatus, or device. In the present disclosure, the computer-readable signal medium may include a data signal propagated in a baseband or as a part of a carrier, where the computer-readable program code is carried. Such a propagated data signal may take a variety of forms including, but not limited to, an electromagnetic signal, an optical signal, or any suitable combination of the foregoing. The computer-readable signal medium may also be any computer-readable medium, other than a computer readable storage medium, that may send, propagate, or transmit a program for use by or in connection with an instruction execution system, apparatus, or device. The program code included on the computer-readable medium may be transmitted with any suitable medium, including, but not limited to: wires, optical cables, RF (radio frequency), or the like, or any suitable combination of the foregoing.

In some implementations, a client and a server may communicate using any currently known or future developed network protocol, such as HTTP (HyperText Transfer Protocol), and may be interconnected with any form or medium of digital data communication (e.g., a communication network). Examples of the communication network include local area networks ("LANs"), wide area networks ("WANs"), internets (e.g., the Internet), and peer-to-peer networks (e.g., ad hoc peer-to-peer networks), as well as any currently known or future developed networks.

The computer-readable medium described above may be included in the electronic device; or may be separately present without being assembled into the electronic device.

The computer-readable medium carries one or more programs, and when the one or more programs are executed by the electronic device, the electronic device is caused.

The computer readable medium carries one or more programs, and when the one or more programs are executed by the electronic device, the electronic device is caused to: obtain an audio playback progress; obtain an interface object texture according to the audio playback progress, where the interface object texture includes at least one of a text texture, a pitch texture, an intonation texture, a pitch identifier texture, or an intonation evaluation texture; and render the interface object texture into an audio interface for display.

Computer program code for performing the operations of the present disclosure may be written in one or more programming languages or a combination thereof, the programming languages include, but not limited to, object-oriented programming languages such as Java, Smalltalk, or C++, and conventional procedural programming languages, such as "C" language or similar programming languages. The program code may be executed entirely on a user computer, partially on a user computer, as a stand-alone software package, partially on a user computer and partially on a remote computer, or entirely on a remote computer or server. In the case of a remote computer, the remote computer may be connected to the user computer through any kind of network, including a local area network (LAN) or a wide area network (WAN), or may be connected to an external computer (e.g., connected through the Internet using an Internet service provider).

The flowcharts and block diagrams in the figures illustrate possibly implemented architecture, functionality, and operation of systems, methods, and computer program products according to various embodiments of the present disclosure. In this regard, each block in the flowchart or block diagram may represent a module, program segment, or portion of code that includes one or more executable instructions for implementing the specified logical function. It should also be noted that in some alternative implementations, the functions noted in the blocks may also occur in a different order than that illustrated in the figures. For example, two consecutively represented blocks may actually be performed substantially in parallel, which may sometimes be performed in the reverse order, depending on the functionality involved. It is also noted that each block in the block diagrams and/or flowcharts, as well as combinations of blocks in the block diagrams and/or flowcharts, may be implemented with a dedicated hardware-based system that performs the specified functions or operations, or may be implemented in a combination of dedicated hardware and computer instructions.

The units involved in the embodiments of the present disclosure may be implemented with software, or may be implemented with hardware. In some cases, the name of the unit does not constitute a limitation on the unit itself. For example, a first obtaining unit may be further described as "a unit obtaining at least two Internet Protocol addresses".

The functions described above may be performed, at least in part, by one or more hardware logic components. For example, without limitation, illustrative types of hardware logic components that may be used include: field programmable gate arrays (FPGAs), application specific integrated circuits (ASICs), application specific standard products (ASSPs), system-on-a-chip (SOCs), complex programmable logic devices (CPLDs), and the like.

In the context of the present disclosure, a machine-readable medium may be a tangible medium that may contain or store a program for use by or in connection with an instruction execution system, apparatus, or device. The machine-readable medium may be a machine-readable signal medium or a machine-readable storage medium. The machine-readable medium may include, but is not limited to, an electronic, magnetic, optical, electromagnetic, infrared, or semiconductor system, apparatus, or device, or any suitable combination of the foregoing. More specific examples of the machine-readable storage medium may include electrical connection based on one or more lines, a portable computer disk, a hard disk, a random access memory (RAM), a read-only memory (ROM), an erasable programmable read-only memory (EPROM or flash memory), an optical fiber, a portable compact disc read-only memory (CD-ROM), an optical storage device, a magnetic storage device, or any suitable combination of the foregoing.

The above description is merely an illustration of the preferred embodiments of the present disclosure and the principles of the applied technology. It should be understood by those skilled in the art that the disclosure scope involved in the present disclosure is not limited to the technical solutions of the specific combination of the above technical features, and should also cover other technical solutions formed by any combination of the above technical features or their equivalent features without departing from the above disclosed concept, for example, technical solutions formed by mutually replacing the above features and technical features disclosed in the present disclosure (but not limited thereto) having similar functions.

Further, while operations are depicted in a particular order, this should not be understood to require that these operations be performed in the particular order shown or in sequential order. In certain circumstances, multitasking and parallel processing may be advantageous. Likewise, while several specific implementation details are included in the discussion above, these should not be construed as limiting the scope of the present disclosure. Certain features described in the context of separate embodiments may also be implemented in combination in a single embodiment. Conversely, the various features described in the context of a single embodiment may also be implemented in multiple embodiments either individually or in any suitable subcombination.

Although the present subject matter has been described in language specific to structural features and/or methodological acts, it is to be understood that the subject matter defined in the appended claims is not necessarily limited to the specific features or acts described above. Rather, the specific features and acts described above are merely example forms of implementing the claims.

## Claims

1. A method for rendering an audio interface, comprising:
obtaining an audio playback progress;
obtaining an interface object texture according to the audio playback progress; and
rendering the interface object texture into an audio interface for display.

2. The method of claim 1, wherein the interface object texture comprises at least one of: a text texture, a pitch texture, or an intonation texture.

3. The method of claim 2, wherein in accordance with the interface object texture being the text texture, obtaining the interface object texture according to the audio playback progress comprises:
determining a target text group from a text file according to the audio playback progress, wherein the text file comprises a plurality of text groups, the text group comprises a plurality of characters, and the character carries a timestamp; the target text group comprises a first text group that is currently played and a predetermined number of second text groups that have been played and/or have not been played; and
obtaining a first text texture corresponding to the first text group and a second text texture corresponding to the second text group.

4. The method of claim 3, wherein obtaining the first text texture corresponding to the first text group comprises:
obtaining a text texture of a first display style and a text texture of a second display style corresponding to the first text group;
determining a character having a timestamp matching with the audio playback progress as a cropping point;
cropping the text texture of the first display style and/or the text texture of the second display style based on the cropping point; and
generating the first text texture corresponding to the first text group according to the cropped text texture of the first display style and the cropped text texture of the second display style.

5. The method of claim 4, wherein cropping the text texture of the first display style based on the cropping point comprises:
cropping, in the text texture of the first display style, a text texture after the cropping point; and
cropping the text texture of the second display style based on the cropping point comprises:
cropping, in the text texture of the second display style, a text texture before the cropping point.

6. The method of claim 4, wherein generating the first text texture corresponding to the first text group according to the cropped text texture of the first display style and the cropped text texture of the second display style comprises:
stitching, in accordance with the text texture of the first display style and the text texture of the second display style being cropped based on the cropping point, the cropped text texture of the first display style and the cropped text texture of the second display style to obtain the first text texture corresponding to the first text group; and
superimposing, in accordance with the text texture of the first display style being cropped based on the cropping point and the text texture of the second display style being not cropped, the cropped text texture of the first display style onto a corresponding part of the uncropped text texture of the second display style to obtain the first text texture corresponding to the first text group.

7. The method of claim 5, wherein obtaining the second text texture corresponding to the second text group comprises:
obtaining the text texture of the first display style corresponding to the second text group that has been played and/or the text texture of the second display style corresponding to the second text group that has not been played.

8. The method of claim 1, wherein in accordance with the interface object texture being a pitch texture, obtaining the interface object texture according to the audio playback progress comprises:
determining a time segment according to the audio playback progress, wherein a timestamp corresponding to the audio playback progress is within the time segment; and
obtaining a pitch texture having a timestamp falling within the time segment, wherein the pitch texture is pre-created based on the audio and carries the timestamp and standard pitch information.

9. The method of claim 1, wherein in accordance with the interface object texture being an intonation texture, obtaining the interface object texture according to the audio playback progress comprises:
obtaining intonation evaluation information corresponding to the audio playback progress, wherein the intonation evaluation information represents intonation evaluation information of acquired speech audio frame; and
generating at least one intonation texture according to the intonation evaluation information, wherein the intonation texture carries a timestamp and standard pitch information.

10. The method of claim 9, wherein obtaining the intonation evaluation information corresponding to the audio playback progress comprises:
obtaining pitch information of speech audio frames acquired within a predetermined historical duration;
determining a deviation between the pitch information and corresponding standard pitch information; and
determining the intonation evaluation information according to the deviation, wherein the intonation evaluation information comprises: matching with the standard pitch information and failing to match with the standard pitch information.

11. The method of claim 10, wherein generating at least one intonation texture according to the intonation evaluation information comprises:
extracting, as an intonation timestamp, a timestamp of a speech audio frame for which the intonation evaluation information matches with the standard pitch information; and
generating the at least one intonation texture according to the intonation timestamp.

12. The method of claim 1, wherein rendering the interface object texture into the audio interface for display comprises:
superposing the interface object texture onto a predetermined empty texture to obtain a target texture; and
rendering the target texture to the audio interface for display.

13. The method of claim 12, wherein rendering the interface object texture into the audio interface for display comprises:
obtaining position information of a pixel point in the audio interface;
determining, according to the position information, whether the pixel point falls into an area corresponding to the interface object texture;
rendering, in accordance with the pixel point falling into the area corresponding to the interface object texture, the pixel point with a color corresponding to the interface object texture; and
rendering the pixel point with a transparent color in accordance with the pixel point failing to fall into the area corresponding to the interface object texture.

14. The method of claim 1, further comprising:
creating a texture buffering region;
generating a text texture and a pitch texture based on the audio; and
storing the text texture and the pitch texture into the texture buffering region.

15. The method of claim 2, wherein obtaining the audio playback progress comprises:
obtaining a playback progress of a background audio of a target song, wherein the target song is a song that is currently sung;
obtaining the interface object texture according to the audio playback progress comprises:
obtaining a lyrics texture of the target song, a pitch texture of the target song, and an intonation texture corresponding to a speech audio of the target song according to the playback progress of the background audio, wherein the speech audio is an audio of singing the target song; and
rendering the interface object texture into the audio interface for display comprises:
rendering the lyrics texture, the pitch texture and the intonation texture into the audio interface for display.

16. An apparatus for rendering an audio interface, comprising:
an audio playback progress obtaining module configured to obtain an audio playback progress;
an interface object texture obtaining module configured to obtain an interface object texture according to the audio playback progress; and
a rendering module configured to render the interface object texture into an audio interface for display.

17. An electronic device, comprising: one or more processors;
a storage device for storing one or more programs;
the one or more programs, when executed by the one or more processors, causing the one or more processors to implement the method of any one of claims 1-15.

18. A storage medium comprising computer executable instructions, wherein the computer executable instructions, when executed by a computer processor, are configured to perform the method of any one of claims 1-15.
